# EUROPÄISCHE PATENTSCHRIFT

(11) **EP 3 198 121 B1**
(45) Veröffentlichungstag und Bekanntmachung des Hinweises auf die Patenterteilung: **02.01.2019**
(21) Anmeldenummer: 15756400.6
(22) Anmeldetag: 28.08.2015
(51) Int. Cl.: F01N 3/20, F01N 13/04, F01N 13/10

(54) **ABGASNACHBEHANDLUNGSSYSTEM FÜR VERBRENNUNGSMOTOREN**
EXHAUST GAS AFTER-TREATMENT SYSTEM FOR INTERNAL COMBUSTION ENGINES
SYSTÈME DE POST-TRAITEMENT DES GAZ D'ÉCHAPPEMENT DE MOTEURS À COMBUSTION INTERNE

(30) Priorität: 22.09.2014 DE 102014219061
(43) Veröffentlichungstag der Anmeldung: 02.08.2017
(60) Teilanmeldung: 18203022.1
(73) Patentinhaber: Voith Patent GmbH, 89522 Heidenheim (DE)
(72) Erfinder: STRAUB, Christian, 89547 Gerstetten (DE); SCHLEIFER, Benedikt, 89168 Niederstotzingen (DE); WALTER, Michael, 89129 Langenau (DE); WEGMANN, Andreas, 67655 Kaiserslautern (DE)
(86) Internationale Anmeldenummer: PCT/EP2015/069735
(87) Internationale Veröffentlichungsnummer: WO 2016/045908

(56) Entgegenhaltungen:
- EP-A1- 1 947 306
- EP-A2- 2 131 020
- DE-T5-112013 000 286
- US-A1- 2011 146 253
- US-A1- 2013 343 959

## Beschreibung

Die Erfindung betrifft ein Abgasnachbehandlungssystem zur Stickoxidreduzierung mittels SCR (selektive katalytische Reduktion) für ein Fahrzeug mit einem Verbrennungsmotor. Das Abgasnachbehandlungssystem umfasst mindestens zwei Abgasstränge, die jeweils einen SCR-Katalysator und stromaufwärts von diesem jeweils eine Zusatzstoff-Eindüsungskammer enthalten, und einen Zusatzstoff-Tank, der diese Eindüsungskammern versorgt. Weiterhin betrifft die Erfindung auch ein Fahrzeug mit einem solchen Abgasnachbehandlungssystem.

Als Zusatzstoff für den SCR-Prozess hat sich Harnstoff-Wasser-Lösung bewährt, wie sie beispielsweise unter dem Markennamen AdBlue vertrieben wird. Der aus der Harnstoff-Wasser-Lösung im Prozess gebildete Ammoniak führt in Verbindung mit dem SCR-Katalysator zur Reduzierung der Stickoxide im Abgas. Generell ist auch die Verwendung eines anderen Zusatzstoffes, der im Prozess Ammoniak bildet, möglich. Aus EP 2255078 A1 ist ein solches Abgasnachbehandlungssystem bekannt, bei dem aus einem Tank zwei Eindüsungskammern in zwei Abgassträngen versorgt werden. Problematisch bei einem solchen System ist es, dass nur sehr aufwändig oder gegebenenfalls unzuverlässig für eine gleichmäßige Dosierung des Zusatzstoffes in den beiden Abgassträngen und damit für eine gute Emissionsreduzierung gesorgt werden kann.

Die Druckschrift DE 112013000286 T5 offenbart einen Motor mit mehreren Abgassträngen und einem Abgasbehandlungssystem, bei dem Harnstofflösung in zwei entsprechende Mischleitungen eingespritzt wird.

In der Druckschrift US 2013/343959 A1 wird eine mehrflutige Abgasanlage mit zwei Einspritzsystemen zur Abgasbehandlung gezeigt. In beiden Einspritzsystemen für die Abgasbehandlungsflüssigkeit ist jeweils eine Pumpe zur Versorgung der Common Rail für die Injektoren vorgesehen.

Auch die Druckschrift EP 2131020 A2 beschreibt ein Abgasnachbehandlungssystem für eine zweiflutige Abgasanlage und eine dafür vorgesehene Zusatzstoff-Dosierung in jeden der Abgasstränge. Die gewünschte Dosierung wird dabei über entsprechend angesteuerte, volumetrische Dosierpumpen erreicht.
Die Aufgabe der Erfindung ist es, ein kompaktes und zuverlässigeres Abgasnachbehandlungssystem, das eine effektive Emissionsreduzierung bietet, zu entwickeln.
Die Aufgabe wird für das Abgasnachbehandlungssystem erfindungsgemäß dadurch gelöst, dass an jedem dieser Abgasstränge je eine zugeordnete Zusatzstoff-Dosiereinheit und je eine zugeordnete Zusatzstoff-Fördereinheit, die die Dosiereinheit mit Zusatzstoff auf erhöhtem Druckniveau versorgt, vorhanden sind und dass diese Fördereinheiten jeweils über eine Vorlauf-Leitung mit dem Zusatzstoff-Tank verbunden sind, wobei die jeweiligen Vorlauf-Leitungen zu den Fördereinheiten im Wesentlichen die gleiche Leitungslänge haben und wobei für eine Druckluft-Versorgung der Fördereinheiten eine gemeinsame Druckluft-Hauptleitung vorhanden ist, die sich auf Stichleitungen verzweigt und darüber die Fördereinheiten versorgt.

Der Vorteil dieser Anordnung ist, dass bei gleicher Leitungslänge zwischen den Fördereinheiten keine unterschiedlichen Ansaugdrücke vorliegen können, da die Druckverluste im Wesentlichen gleich sind. Die Fördereinheiten können somit in gleicher Weise den Zusatzstoff mit erhöhtem Druck den jeweiligen Dosiereinheiten zuführen, die diesen über die Einspritzdüse in der Eindüsungskammer dem Abgas des jeweiligen Abgasstranges zumischen. Da die Vorbedingungen an den Fördereinheiten systembedingt immer vergleichbar sind, ist eine zuverlässige auf den jeweiligen Bedarf im Abgasstrang abgestimmte Dosierung möglich.

Weitere vorteilhafte Merkmale der erfindungsgemäßen Ausführung, die die Zuverlässigkeit oder die Kompaktheit des Systems zusätzlich verbessern, finden sich in den Unteransprüchen.

Es ist von Vorteil, wenn die Vorlauf-Leitungen zu den jeweiligen Fördereinheiten eine gemeinsame Vorlauf-Hauptleitung und jeweils eine Vorlauf-Stichleitung je Fördereinheit aufweisen. Bevorzugt beträgt die Länge der Vorlauf-Hauptleitung in Bezug zur gesamten Leitungslänge der Vorlaufleitung (vom Zusatzstoff-Tank bis zur Fördereinheit) mindestens 50%, besonders bevorzugt mindestens 70%. Dadurch ist zum einen eine einfache Montage möglich und zum anderen ist der Einfluss der unterschiedlichen Stichleitungen auf den Ansaugdruck an den Fördereinheiten minimiert, wodurch Unterschiede im Förderverhalten und im Dosierverhalten reduziert werden.

In einer weiteren vorteilhaften Ausführung sind die Fördereinheiten jeweils über eine Rücklauf-Leitung mit dem Zusatzstoff-Tank verbunden, wobei die jeweiligen Rücklauf-Leitungen zu den Fördereinheiten im Wesentlichen die gleiche Leitungslänge haben. Dadurch dass der Überschuss an Zusatzstoff über die Rücklauf-Leitungen zum Tank zurückgeführt wird, kann eine immer ausreichende Versorgung der Dosiereinheiten gewährleistet werden. Dadurch dass auch diese Rücklaufleitungen gleich lang sind und somit gleichen Druckverlust darstellen.

Auch bei den Rücklauf-Leitungen wirkt es sich positiv aus, wenn eine gemeinsame Rücklauf-Hauptleitung und jeweils eine Rücklauf-Stichleitung je Fördereinheit (10) vorhanden sind und wenn in bevorzugter Ausführung die Rücklauf-Hauptleitung mindestens 50%, besonders bevorzugt mindestens 70% der Leitungslänge der gesamten Länge einer Rücklauf-Leitung vom Fördermodul bis zum Tank ausmacht.

Um eine einfach Montage und eine erhöhte Zuverlässigkeit bei niedrigen Umgebungstemperaturen zu ermöglichen, verläuft in einer weiteren Ausführungsform zumindest ein Abschnitt der Vorlaufleitung und zumindest ein Abschnitt der Rücklaufleitung zusammen mit zumindest einer Heizmittelleitung gebündelt in einem oder mehreren hintereinander angeordneten Schläuchen oder Rohren. Dadurch dass die genannten Leitungen in einem Schlauch oder Rohr gebündelt werden, lassen sie sich einfacher verlegen und gleichzeitig ist gewährleistet, dass die Heizleitung nach an den Zusatzstoffleitungen verläuft. Zusätzlich erhöht sich auch die Robustheit der Anordnung, da die Leitungen nicht so leicht beschädigt werden können. Bevorzugt beträgt die gebündelte Länge mindestens 50%, besonders bevorzugt mindestens 70% der gesamten Vorlaufleitungslänge.

In einer besonders vorteilhaften Ausführung verlaufen in einem Abschnitt sowohl die Vorlauf-Hauptleitung und die Rücklauf-Hauptleitung als auch eine der Vorlauf-Stichleitungen und eine der Rücklauf-Stichleitungen gebündelt in einem dieser Schläuche oder Rohre. Dadurch ergeben sich noch weniger Leitungsbündel, die verlegt werden müssen.

Durch die Verlegung dieser Schläuche oder Rohre mit den gebündelten Leitungen können somit die Leitungen zwischen Tank und den Fördereinheiten recht kompakt installiert und im Bedarfsfall auch zuverlässig beheizt werden.

Um die Anlage möglich kostengünstig auszuführen ist es von Vorteil, wenn für die SCR-Katalysatoren gleiche Gehäuse verwendet werden, insbesondere können Gehäuse verwendet werden, die auf beiden Seiten Montagemöglichkeiten für Sensoren aufweisen. So können trotz gleichem Gehäuse in beiden Abgassträngen die nötigen NOx- oder Temperatursensoren jeweils auf der geschützten Innenseite eingesetzt werden. Die außenliegenden Montagestellen werden einfach verschlossen.

Besondere Vorteile bietet das System insbesondere bei Schienenfahrzeugen mit größeren Motoren. Durch die zuverlässige Dosierung in die verschiedenen Abgasstränge können bei größeren Motoren mehrere kleinere SCR-Katalysatoren verwendet werden, wie sie in einflutigen Abgasanlagen von Fahrzeugen mit kleineren Motoren, beispielsweise bei Nutzkraftwagen eingesetzt werden. Das ist insgesamt günstiger als eine großen SCR-Katalysator für den gesamten Abgasstrom einzusetzen.

Die Zuverlässigkeit bei kalten Umgebungstemperaturen kann erhöht werden, wenn zumindest eine Heizmittelleitung vorhanden ist, die entlang der Vorlauf-Hauptleitung und der Rücklauf-Hauptleitung verläuft, wobei die Heizmittelleitung bevorzugt eine elektrische Heizleitung oder eine Motorkühlmittelleitung ist. Außerdem können die Vorlauf-Stichleitungen und die Rücklaufstichleitungen, sowie die Fördereinheiten und die Dosiereinheiten beheizbar ausgeführt sein. Durch beide Maßnahmen kann das gesamte Zuführsystem beheizt werden.

Weiterhin können der Zusatzstofftank und vorhandene Tankleitungen beheizbar ausgeführt sein. Damit kann die Bevorratung und die Betankung für den Betrieb bei kalten Temperaturen zuverlässig gemacht werden.

Insbesondere für Schienenfahrzeuge ist es von Vorteil, wenn der Zusatzstoff-Tank von beiden Seiten des Fahrzeuges befüllt werden kann. Dazu können zwei Tankleitungen vorgesehen werde, bevorzugt münden die beiden Tankleitungen über ein Verteilstück in eine gemeinsame Tankleitung, die zum Zusatzstoff-Tank führt.
Bevorzugt werden die Fördereinheiten und die Dosiereinheiten von einer im Abgasnachbehandlungssystem vorhandenen Steuereinheit geregelt. Von dieser Steuereinheit werden die Signale von NOx-Sensoren und gegebenenfalls auch von Temperatursensoren berücksichtig die in den Abgassträngen oder an den SCR-Katalysatoren vorhandenen sind. Ebenso kann diese Steuereinheit so ausgeführt sein, dass sie Ausfälle oder Fehlfunktionen der verschiedenen Einheiten im System detektieren und zuordnen kann.

Wichtig für die Funktion der Fördereinheiten ist die Druckluftversorgung. Um das System kompakter und die Montage einfacher zu machen, erfolgt diese Druckluft-Versorgung über eine gemeinsame Druckluft-Hauptleitung, die sich auf Stichleitungen aufteilt und die jeweiligen Fördereinheiten darüber versorgt.
Für ein Fahrzeug umfassend einen Verbrennungsmotor mit mindestens zwei Zylinderbänken, wobei jeder Zylinderbank ein Abgasstrang zugeordnet ist, wird die Aufgabe erfindungsgemäß dadurch gelöst das ein erfindungsgemäßes Abgasnachbehandlungssystem wie zuvor beschrieben vorgesehen wird.
Weiterhin ist es vorteilhaft, um die Kompaktheit und Robustheit des Systems zu erhöhen, wenn zumindest der überwiegende Anteil der Vorlauf-Hauptleitung und der Rücklauf-Hauptleitung innerhalb einer Tragstruktur, insbesondere innerhalb eines Tragrahmens des Fahrzeuges verläuft, beispielsweise im Querschnitt eines Tragholmes. Bevorzugt ist dieser Anteil der Vorlauf-Hauptleitung und der Rücklauf-Hauptleitung zusammen mit zumindest einer Heizmittelleitung in einem oder mehreren hintereinander angeordneten Schläuchen oder Rohren gebündelt. Somit kann das Leitungsbündel einfacher montiert und im Betrieb zuverlässig geheizt werden.

Anhand von Ausführungsbeispielen werden weitere vorteilhafte Ausprägungen der Erfindung erläutert unter Bezugnahme auf die Zeichnungen. Die genannten Merkmale können nicht nur in der dargestellten Kombination vorteilhaft umgesetzt werden, sondern auch einzeln untereinander kombiniert werden. Die Figuren zeigen im Einzelnen:
- **Fig.1**: Schema eines erfindungsgemäßes Abgasnachbehandlungssystems an einem Verbrennungsmotor
- **Fig.2**: Ausschnitt aus einem Schema zur Darstellung der Leitungsführung

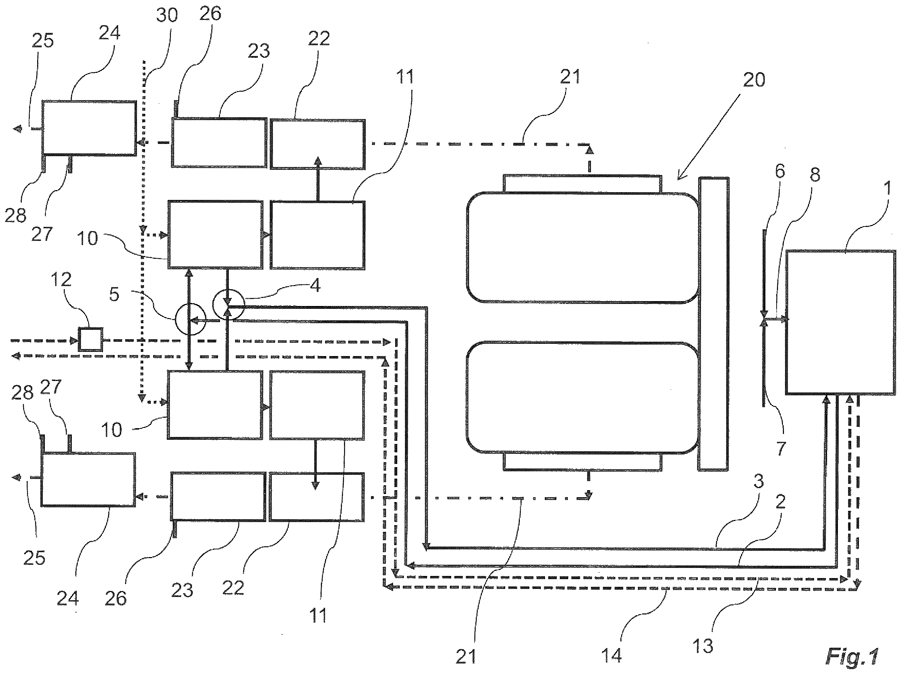

Nachfolgend werden die Figuren detaillierter beschrieben. In **Fig.1** ist ein Verbrennungsmotor 20 mit zwei Zylinderbänken, beispielsweise ein V-Motor, mit zweiflutiger Abgasführung und dem dazugehörigen Abgasnachbehandlungssystem zur Stickoxidreduzierung schematisch dargestellt. Andere Elemente zur Abgasreinigung, die vorhanden sein können, wie beispielsweise Partikelfilter, sind in der Figur weggelassen. In dem Zusatzstoff-Tank 1 wird eine Harnstoff-Wasser-Lösung bereitgestellt, beispielsweise sogenanntes AdBlue. Über eine erste Tankleitung 6 oder eine zweite Tankleitung 7, die in eine gemeinsame Tankleitung 8 münden, kann der Tank 1 von beiden Seiten des Fahrzeuges befüllt werden.

Je Zylinderbank ist ein Abgasstrang 21 vorhanden. Der Abgasstrang 21 weist jeweils eine Eindüsungskammer 22 auf, in der über eine oder mehrere Düsen der Zusatzstoff feinverteilt in den Abgasstrom eingebracht wird. In einem nachfolgenden Mischer 23 wird das Abgas mit dem Zusatzstoff durchmischt und dem SCR-Katalysator 24 zugeführt. Optional kann das Abgas zuvor noch einen nicht dargestellten Hydrolyse-Katalysator durchlaufen. Aus dem SCR-Katalysator 24 wird das Abgas über den Abgasauslass 25 weitergeführt, beispielsweise zur Auspuffanlage.

Zu jedem Abgasstrang 21 gibt es eine Fördereinheit 10 und eine Dosiereinheit 11 für den Zusatzstoff. Die Fördereinheit 10 saugt Zusatzstoff aus dem Tank 1 an und fördert ihn unter erhöhtem Druck, üblicherweise bis max. 4 bar, zur Dosiereinheit 11. Die Dosiereinheit 11 führt die benötigte Zusatzstoffmenge der Düse in der Eindüsungskammer 22 zu. Die Fördereinheiten 10 werden zudem noch mit der benötigten Druckluft über eine Druckluft-Hauptleitung 30, die sich von einem Anschluss aus auf zwei Stichleitungen zu den beiden Fördereinheiten 10 verzweigt, versorgt. Trotz der getrennten Förder- und Dosiereinheiten für die zwei Abgasstränge 21 werden die benötigten Medien jeweils über eine gemeinsame Versorgung bereitgestellt. Das vereinfacht das gesamte System.

Die Fördereinheiten 10 und die Dosiereinheiten 11 werden von einer nicht dargestellten Steuereinheit geregelt. Für die Regelung werden die Temperatursensoren 26 an den Mischern und die Temperatursensoren 27 und die NOx-Sensoren 28 an den SCR-Katalysatoren 24 verwendet. Über geeignete Regelalgorithmen kann die Förderung und die Dosierung an die Betriebsbedingungen angepasst werden. Die Steuereinheit ist so ausgeführt, dass sie auch die Funktion der verschiedenen Einheiten überwachen, sowie Fehlfunktionen oder Ausfälle einzelner Einheiten detektieren und zuordnen kann.

Die Fördereinheiten 10 sind über die Vorlauf-Leitungen und über die Rücklauf-Leitungen mit dem Tank 1 verbunden. Über die Vorlauf-Leitungen wird der Zusatzstoff angesaugt und über die Rücklauf-Leitungen wir der überschüssige Zusatzstoff zum Tank 1 zurückgepumpt. Dadurch ist ein stabiler Betrieb der Fördereinheiten möglich. Die Vorlauf-Leitungen weisen eine gemeinsame Vorlauf-Hauptleitung 2, die vom Tank 1 bis zum Verteilstück 5 reicht, und Vorlauf-Stichleitungen die vom Verteilstück 5 bis zu den einzelnen Fördereinheiten 10 reichen. Die jeweilige Gesamtleitungslänge des Vorlaufes einer Fördereinheit 10, zusammengesetzt aus Hauptleitung und Stichleitung, ist für die beiden Fördereinheiten gleich. Dadurch herrschen gleiche Ansaugbedingungen für die Fördereinheiten, was die Regelung vereinfacht und die Funktion stabilisiert. Die gemeinsame Rücklauf-Hauptleitung 3 geht vom Tank 1 bis zum Verteilstück 4. Von diesem Verteilstück 4 führen die einzelnen Rücklauf-Stichleitungen zu den beiden Fördereinheiten 10.

In der gezeigten Ausführung wird Kühlmittel des Verbrennungsmotors 20 als Heizmittel für die Zusatzstoff-Leitungen verwendet. Das Kühlmittel wird durch den Heizmittel-Vorlauf 13 und den Heizmittel-Rücklauf 14 geleitet und über das Magnetventil 12 in der Menge gesteuert. Anders als in der dargestellten Variante, bei der das Magnetventil 12 im Heizmittel-Vorlauf 13 vorgesehen ist, kann auch zusätzlich oder alternativ ein Magnetventil im Heizmittel-Rücklauf 14 vorgesehen sein. Heizmittel-Vorlauf 13 und -Rücklauf 14 werden entlang der Zusatzstoff-Hauptleitungen und entlang der Stichleitungen 2.1,2.2,3.1,3.2 (was im Schema aus Übersichtlichkeitsgründen nicht dargestellt ist) geführt.

In einer bevorzugten Ausführung werden zumindest ein Teil der Zusatzstoff-Vorlaufleitung 2,2.1,2.2 und ein Teil der Zusatzstoff-Rücklaufleitung 3,3.1,3.2 sowie Heizmittel-Vorlauf 13 und -Rücklauf 14 wenigstens in einem Abschnitt gebündelt und in einem Schlauch oder Rohr verlegt. Gegebenenfalls kann dieser Schlauch oder das Rohr auch aus mehreren aufeinanderfolgenden Stücken bestehen bzw. unterbrochen sein. Die einzelnen Leitungen für Zusatzstoff 2,2.1,2.2,3,3.1,3.2 und für Heizmittel 13,14 haben üblicherweise einen Außendurchmesser von 5 bis 10 mm. Der Schlauch oder das Rohr hat dann einen Außendurchmesser von 30 bis 50 mm.

So kann ein Leitungsbündel aus vier Leitungen (Zusatzstoff-Vorlauf und -Rücklauf und Heizmittel-Vorlauf und -Rücklauf) gebildet werden oder ein Leitungsbündel aus sechs Leitungen, indem über einen Abschnitt sowohl die Vorlauf- und Rücklauf-Hauptleitung als auch ein Paar der Stichleitungen, zum Beispiel die Vorlauf- und Rücklauf-Stichleitung für eine der Fördereinheiten 10, mit in das Bündel aufgenommen werden. Durch die Bündelung in einem Schlauch oder Rohr lassen sich die Leitungen bei der Montage einfacher verlegen. Zudem sind sie dadurch insgesamt robuster, was auch Vorteile beim Brandschutz bietet. Bevorzugt ist zumindest ein Teil, besonders bevorzugt der überwiegende Teil, d.h. mehr als 50%, der Zusatzstoff-Leitungen 2 und 3 innerhalb einer Tragstruktur, insbesondere innerhalb eines Tragrahmens des Fahrzeuges verlegt. Dadurch sind die Leitungen bzw. das Leitungsbündel nochmals besser geschützt.

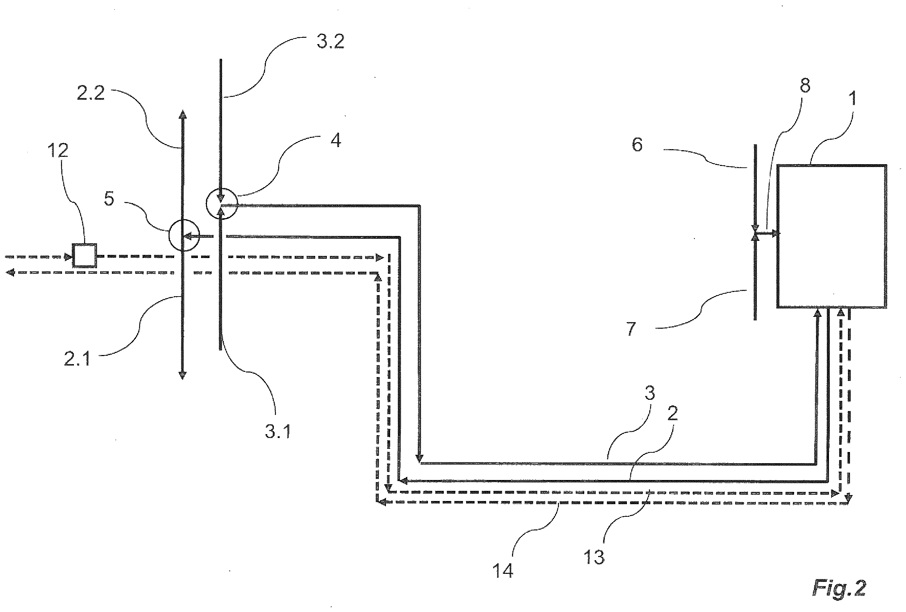

**Fig.2** zeigt wiederum schematisch einen Ausschnitt mit der Leitungsführung eines Abgasnachbehandlungssystems. Gleiche Teile sind mit gleichen Bezugszeichen versehen. Besonders dargestellt sind die Stichleitungen der Zusatzstoff-Leitungen. Ausgehend vom Verteilstück 5 sind die beiden Vorlauf-Stichleitungen 2.1 und 2.2 gleich lang. Und auch die beiden Rücklauf-Stichleitungen 3.1 und 3.2 bis zum Verteilstück 4 sind in dieser Ausführung gleich lang. Dadurch sind gleiche Druckverhältnisse an den beiden hier nicht dargestellten Fördereinheiten gewährleistet.

### Bezugszeichenliste

- 1: Zusatzstoff-Tank
- 2: Vorlauf-Hauptleitung
- 2.1: erste Vorlauf-Stichleitung
- 2.2: zweite Vorlauf-Stichleitung
- 3: Rücklauf-Hauptleitung
- 3.1: erste Rücklauf-Stichleitung
- 3.2: zweite Rücklauf-Stichleitung
- 4: Verteilstück Rücklauf
- 5: Verteilstück Vorlauf
- 6: erste Tankleitung
- 7: zweite Tankleitung
- 8: gemeinsame Tankleitung

- 10: Fördereinheit
- 11: Dosiereinheit
- 12: Magnetventil
- 13: Heizmittel-Vorlauf
- 14: Heizmittel-Rücklauf

- 20: Verbrennungsmotor
- 21: Abgasstrang
- 22: Eindüsungskammer
- 23: Mischer
- 24: SCR-Katalysator
- 25: Abgasauslass
- 26, 27: Temperatursensor
- 28: NOx-Sensor

- 30: Druckluft-Leitung

## Patentansprüche

1. Abgasnachbehandlungssystem zur Stickoxidreduzierung mittels SCR für ein Fahrzeug mit einem Verbrennungsmotor umfassend mindestens zwei Abgasstränge (21), die jeweils einen SCR-Katalysator (24) und stromaufwärts von diesem jeweils eine Zusatzstoff-Eindüsungskammer (22) enthalten, und einen Zusatzstoff-Tank (1), der diese Eindüsungskammern (22) versorgt,
wobei an jedem dieser Abgasstränge (21) je eine zugeordnete Zusatzstoff-Dosiereinheit (11) und je eine zugeordnete Zusatzstoff-Fördereinheit (10), die die Dosiereinheit (11) mit Zusatzstoff auf erhöhtem Druckniveau versorgt, vorhanden sind und dass diese Fördereinheiten (10) jeweils über eine Vorlauf-Leitung (2 +2.1, 2+2.2) mit dem Zusatzstoff-Tank (1) verbunden sind, wobei die jeweiligen Vorlauf-Leitungen (2+2.1, 2+2.2) zu den Fördereinheiten (10) im Wesentlichen die gleiche Leitungslänge haben.
**dadurch gekennzeichnet,**
**dass** für reine Druckluft-Versorgung der Fördereinheiten (10) eine gemeinsame Druckluft-Hauptleitung (30) vorhanden ist, die sich auf Stichleitungen verzweigt und darüber die Fördereinheiten (10) versorgt.

2. Abgasnachbehandlungssystem nach Anspruch 1
**dadurch gekennzeichnet,**
**dass** die Vorlauf-Leitungen (2+2.1, 2+2.2) eine gemeinsame Vorlauf-Hauptleitung (2) und jeweils eine Vorlauf-Stichleitung (2.1,2.2) je Fördereinheit (10) aufweisen.

3. Abgasnachbehandlungssystem nach Anspruch 1 oder 2
**dadurch gekennzeichnet,**
**dass** die Fördereinheiten (10) jeweils über eine Rücklauf-Leitung (3+3.1, 3+3.2) mit dem Zusatzstoff-Tank (1) verbunden sind, wobei die jeweiligen Rücklauf-Leitungen (3+3.1, 3+3.2) zu den Fördereinheiten (10) im Wesentlichen die gleiche Leitungslänge haben.

4. Abgasreinigungssystem nach einem der vorherigen Ansprüche
**dadurch gekennzeichnet,**
**dass** die Rücklauf-Leitungen (3+3.1, 3+3.2) eine gemeinsame Rücklauf-Hauptleitung (3) und jeweils eine Rücklauf-Stichleitung (3.1,3.2) je Fördereinheit (10) aufweisen.

5. Abgasnachbehandlungssystem nach einem der vorherigen Ansprüche
**dadurch gekennzeichnet,**
**dass** zumindest ein Abschnitt der Vorlaufleitung (2,2.1,2.2) und zumindest ein Abschnitt der Rücklaufleitung (3,3.1,3.2) zusammen mit zumindest einer Heizmittelleitung (13,14) in einem oder mehreren hintereinander angeordneten Schläuchen oder Rohren gebündelt verlaufen, wobei die gebündelte Länge bevorzugt mindestens 50%, besonders bevorzugt mindestens 70% der gesamten Vorlaufleitungslänge (2+2.1+2.2) ausmacht.

6. Abgasnachbehandlungssystem nach Anspruch 5
**dadurch gekennzeichnet,**
**dass** in einem Abschnitt sowohl die Vorlauf-Hauptleitung (2) und die Rücklauf-Hauptleitung (3) als auch eine der Vorlauf-Stichleitungen (2.1,2.2) und eine der Rücklauf-Stichleitungen (3.1,3.2) gebündelt in einem dieser Schläuche oder Rohre verlaufen.

7. Abgasnachbehandlungssystem nach einem der vorherigen Ansprüche
**dadurch gekennzeichnet,**
**dass** die SCR-Katalysatoren (24) jeweils das gleiche Gehäuse aufweisen.

8. Abgasnachbehandlungssystem nach einem der vorherigen Ansprüche
**dadurch gekennzeichnet,**
**dass** zumindest eine Heizmittelleitung vorhanden ist, die entlang der Vorlauf-Hauptleitung (2) und der Rücklauf-Hauptleitung (3) verläuft, wobei die Heizmittelleitung bevorzugt eine elektrische Heizleitung oder eine Motorkühlmittelleitung ist.

9. Abgasnachbehandlungssystem nach einem der vorherigen Ansprüche
**dadurch gekennzeichnet,**
**dass** die Vorlauf-Stichleitungen (2.1,2.2) und die Rücklaufstichleitungen (3.1,3.2), sowie die Fördereinheiten (10) und die Dosiereinheiten (11) beheizbar ausgeführt sind.

10. Abgasnachbehandlungssystem nach einem der vorherigen Ansprüche
**dadurch gekennzeichnet,**
**dass** der Zusatzstofftank (1) und vorhandene Tankleitungen (6,7,8) beheizbar ausgeführt sind.

11. Abgasnachbehandlungssystem nach einem der vorherigen Ansprüche
**dadurch gekennzeichnet,**
**dass** zwei Tankleitungen (6,7) vorhanden sind, die derart angeordnet sind, dass eine Betankung des Zusatzstoff-Tanks (1) von beiden Seiten des Fahrzeuges möglich ist, insbesondere münden die beiden Tankleitungen (6,7) über ein Verteilstück in eine gemeinsame Tankleitung (8), die zum Zusatzstoff-Tank (1) führt.

12. Abgasnachbehandlungssystem nach einem der vorherigen Ansprüche
**dadurch gekennzeichnet,**
**dass** eine Steuereinheit vorhanden ist, die die Fördereinheiten (10) und die Dosiereinheiten (11) regelt, wobei die Signale von an den SCR-Katalysatoren (24) jeweils vorhandenen NOx-Sensoren (28) berücksichtigt werden.

13. Fahrzeug umfassend einen Verbrennungsmotor mit mindestens zwei Zylinderbänken, wobei jeder Zylinderbank ein Abgasstrang zugeordnet ist, und umfassend ein Abgasnachbehandlungssystem nach einem der vorherigen Ansprüche vorhanden ist.

14. Fahrzeug nach Anspruch 13
**dadurch gekennzeichnet,**
**dass** zumindest der überwiegende Anteil der Vorlaufleitung (2,2.1,2.2) und der Rücklaufleitung (3,3.1,3.2) innerhalb einer Tragstruktur, insbesondere innerhalb eines Tragrahmens des Fahrzeuges verläuft und bevorzugt dass dieser Anteil der Vorlaufleitung und der Rücklaufleitung zusammen mit zumindest einer Heizmittelleitung (13,14) in einem oder mehreren hintereinander angeordneten Schläuchen oder Rohren gebündelt verlaufen.

## Claims

1. Exhaust-gas aftertreatment system for nitrogen oxide reduction by means of SCR for a vehicle having an internal combustion engine, comprising at least two exhaust tracts (21), which include in each case one SCR catalytic converter (24) and, upstream thereof, in each case one auxiliary substance injection chamber (22), and comprising an auxiliary tank (1) which feeds said injection chambers (22),
wherein, at each of said exhaust tracts (21), there is provided in each case one associated auxiliary substance dosing unit (11) and in each case one associated auxiliary substance delivery unit (10), which supplies auxiliary substance to the dosing unit (11) at an elevated pressure level, and in that said delivery units (10) are connected in each case via a feed line (2+2.1, 2+2.2) to the auxiliary substance tank (1), wherein the respective feed lines (2+2.1, 2+2.2) to the delivery units (10) have substantially the same line length,
**characterized**
**in that**, for a supply of compressed air to the delivery units (10), a common compressed-air main line (30) is provided, which splits into branch lines and feeds the delivery units (10) via these.

2. Exhaust-gas aftertreatment system according to Claim 1,
**characterized**
**in that** the feed lines (2+2.1, 2+2.2) have a common feed main line (2) and in each case one feed branch line (2.1, 2.2) for each delivery unit (10).

3. Exhaust-gas aftertreatment system according to Claim 1 or 2,
**characterized**
**in that** the delivery units (10) are connected in each case via a return line (3+3.1, 3+3.2) to the auxiliary substance tank (1), wherein the respective return lines (3+3.1, 3+3.2) to the delivery units (10) have substantially the same line length.

4. Exhaust-gas purification system according to any of the preceding claims,
**characterized**
**in that** the return lines (3+3.1, 3+3.2) have a common return main line (3) and in each case one return branch line (3.1, 3.2) for each delivery unit (10).

5. Exhaust-gas aftertreatment system according to any of the preceding claims,
**characterized**
**in that** at least one portion of the feed line (2, 2.1, 2.2) and at least one portion of the return line (3, 3.1, 3.2) run in bundled fashion together with at least one heating medium line (13, 14) in one or more hoses or pipes arranged in series, wherein the bundled length preferably makes up at least 50%, particularly preferably at least 70%, of the total feed line length (2+2.1+2.2).

6. Exhaust-gas aftertreatment system according to Claim 5,
**characterized**
**in that**, in one portion, both the feed main line (2) and the return main line (3) and one of the feed branch lines (2.1, 2.2) and one of the return branch lines (3.1, 3.2) run in bundled fashion in one of said hoses or pipes.

7. Exhaust-gas aftertreatment system according to any of the preceding claims,
**characterized**
**in that** the SCR catalytic converters (24) each have the same housing.

8. Exhaust-gas aftertreatment system according to any of the preceding claims,
**characterized**
**in that** at least one heating medium line is provided, which runs along the feed main line (2) and the return main line (3), wherein the heating medium line is preferably an electrical heating line or an engine coolant line.

9. Exhaust-gas aftertreatment system according to any of the preceding claims,
**characterized**
**in that** the feed branch lines (2.1, 2.2) and the return branch lines (3.1, 3.2) and the delivery units (10) and the dosing units (11) are designed to be heatable.

10. Exhaust-gas aftertreatment system according to any of the preceding claims,
**characterized**
**in that** the auxiliary fuel tank (1) and provided tank lines (6, 7, 8) are designed to be heatable.

11. Exhaust-gas aftertreatment system according to any of the preceding claims,
**characterized**
**in that** two tank lines (6, 7) are provided, which are arranged such that filling of the auxiliary substance tank (1) is possible from both sides of the vehicle, in particular, the two tank lines (6, 7) open via a distributor piece into a common tank line (8), which leads to the auxiliary substance tank (1).

12. Exhaust-gas aftertreatment system according to any of the preceding claims,
**characterized**
**in that** a control unit is provided which controls the delivery units (10) and the dosing units (11) in closed-loop fashion, wherein the signals from NOx sensors (28) provided in each case at the SCR catalytic converters (24) are taken into consideration.

13. Vehicle comprising an internal combustion engine with at least two cylinder banks, wherein each cylinder bank is assigned one exhaust tract, and comprising an exhaust-gas aftertreatment system according to any of the preceding claims.

14. Vehicle according to Claim 13,
**characterized**
**in that** at least the predominant part of the feed line (2, 2.1, 2.2) and of the return line (3, 3.1, 3.2) runs within a support structure, in particular within a support frame of the vehicle, and preferably in that said part of the feed line and of the return line run in bundled fashion together with at least one heating medium line (13, 14) in one or more hoses or pipes arranged in series.

## Revendications

1. Système de post-traitement des gaz d'échappement pour la réduction des oxydes d'azote au moyen de RCS pour un véhicule avec un moteur à combustion interne comprenant au moins deux lignes d'échappement (21) qui contiennent chacune un catalyseur à RCS (24) et en amont de celui-ci, à chaque fois une chambre d'injection d'adjuvant (22), et un réservoir d'adjuvant (1) qui alimente ces chambres d'injection (22),
à chaque fois une unité de dosage d'adjuvant associée (11) et à chaque fois une unité de refoulement d'adjuvant associée (10) qui alimente l'unité de dosage (11) en adjuvant à un niveau de pression élevé, étant présentes au niveau de chacune de ces lignes d'échappement (21) et en ce que ces unités de refoulement (10) étant à chaque fois connectées par le biais d'une conduite aller (2+2.1, 2+2.2) au réservoir d'adjuvant (1), les conduites aller respectives (2+2.1, 2+2.2) conduisant aux unités de refoulement (10) présentant essentiellement la même longueur de conduite,
**caractérisé en ce que**
pour une alimentation en air comprimé des unités de refoulement (10), il est prévu une conduite principale d'air comprimé commune (30) qui se divise en conduites de branchement et alimente par le biais de celles-ci les unités de refoulement (10) .

2. Système de post-traitement des gaz d'échappement selon la revendication 1,
**caractérisé en ce que**
les conduites aller (2+2.1, 2+2.2) présente une conduite aller principale commune (2) et à chaque fois une conduite de branchement aller (2.1, 2.2) pour chaque unité de refoulement (10).

3. Système de post-traitement des gaz d'échappement selon la revendication 1 ou 2,
**caractérisé en ce que**
les unités de refoulement (10) sont à chaque fois connectées par le biais d'une conduite de retour (3+3.1, 3+3.2) au réservoir d'adjuvant (1), les conduites de retour respectives (3+3.1, 3+3.2) allant aux unités de refoulement (10) présentant essentiellement la même longueur de conduite.

4. Système de post-traitement des gaz d'échappement selon l'une quelconque des revendications précédentes,
**caractérisé en ce que**
les conduites de retour (3+3.1, 3+3.2) présentent une conduite de retour principale commune (3) et à chaque fois une conduite de branchement de retour (3.1, 3.2) par unité de refoulement (10).

5. Système de post-traitement des gaz d'échappement selon l'une quelconque des revendications précédentes,
**caractérisé en ce**
**qu'**au moins une portion de la conduite aller (2,2.1, 2.2) et au moins une portion de la conduite de retour (3,3.1, 3.2) conjointement avec au moins une conduite de milieu chauffant (13, 14) sont mises en faisceau dans un ou plusieurs tuyaux ou tubes disposés les uns derrière les autres, la longueur mise en faisceau représentant de préférence au moins 50 %, particulièrement préférablement au moins 70 % de la longueur totale de la conduite aller (2+2.1+2.2).

6. Système de post-traitement des gaz d'échappement selon la revendication 5,
**caractérisé en ce que**
dans une portion, à la fois la conduite aller principale (2) et la conduite de retour principale (3) ainsi que l'une des conduites de branchement aller (2.1, 2.2) et l'une des conduites de branchement de retour (3.1, 3.2) s'étendent sous forme de faisceaux dans l'un de ces tuyaux ou tubes.

7. Système de post-traitement des gaz d'échappement selon l'une quelconque des revendications précédentes,
**caractérisé en ce que**
les catalyseurs à RCS (24) présentent à chaque fois le même boîtier.

8. Système de post-traitement des gaz d'échappement selon l'une quelconque des revendications précédentes,
**caractérisé en ce**
**qu'**il est prévu au moins une conduite de milieu chauffant qui s'étend le long de la conduite aller principale (2) et de la conduite de retour principale (3), la conduite de milieu chauffant étant de préférence une conduite chauffante électrique ou une conduite de réfrigérant du moteur.

9. Système de post-traitement des gaz d'échappement selon l'une quelconque des revendications précédentes,
**caractérisé en ce que**
les conduites de branchement aller (2.1, 2.2) et les conduites de branchement de retour (3.1, 3.2), ainsi que les unités de refoulement (10) et les unités de dosage (11) sont réalisées de manière à pouvoir être chauffées.

10. Système de post-traitement des gaz d'échappement selon l'une quelconque des revendications précédentes,
**caractérisé en ce que**
le réservoir d'adjuvant (1) et les conduites de réservoir existantes (6, 7, 8) sont réalisés de manière à pouvoir être chauffés.

11. Système de post-traitement des gaz d'échappement selon l'une quelconque des revendications précédentes,
**caractérisé en ce qu'**
il est prévu deux conduites de réservoir (6, 7) qui sont disposées de telle sorte qu'un remplissage du réservoir d'adjuvant (1) soit possible des deux côtés du véhicule, en particulier les deux conduites de réservoir (6, 7) débouchent par le biais d'une pièce de distribution dans une conduite de réservoir commune (8) qui conduit au réservoir d'adjuvant (1) .

12. Système de post-traitement des gaz d'échappement selon l'une quelconque des revendications précédentes,
**caractérisé en ce qu'**
il est prévu une unité de commande qui régule les unités de refoulement (10) et les unités de dosage (11), les signaux provenant de capteurs de NOx (28) prévus à chaque fois au niveau des catalyseurs à RCS (24) étant pris en compte.

13. Véhicule comprenant un moteur à combustion interne avec au moins deux rangées de cylindres, chaque rangée de cylindres étant associée à une ligne d'échappement, et comprenant un système de post-traitement des gaz d'échappement selon l'une quelconque des revendications précédentes.

14. Véhicule selon la revendication 13,
**caractérisé en ce qu'**
au moins la majeure partie de la conduite aller (2,2.1, 2.2) et de la conduite de retour (3,3.1, 3.2) s'étend à l'intérieur d'une structure porteuse, en particulier à l'intérieur d'un cadre porteur du véhicule et de préférence **en ce que** ces parties de la conduite aller et de la conduite de retour conjointement avec au moins une conduite de milieu chauffant (13, 14) s'étendent sous forme de faisceau dans un ou plusieurs tuyaux ou tubes disposés les uns derrière les autres.
